(19) Europäisches Patentamt / European Patent Office / Office européen des brevets

(11) **EP 4 369 556 A1**

(12) **EUROPEAN PATENT APPLICATION**
published in accordance with Art. 153(4) EPC

(43) Date of publication:
**15.05.2024 Bulletin 2024/20**

(21) Application number: **22941424.8**

(22) Date of filing: **13.09.2022**

(51) International Patent Classification (IPC):
*H02J 7/00* (2006.01)    *H01M 10/42* (2006.01)
*H01M 10/44* (2006.01)

(52) Cooperative Patent Classification (CPC):
Y02E 60/10

(86) International application number:
**PCT/CN2022/118456**

(87) International publication number:
**WO 2023/216483 (16.11.2023 Gazette 2023/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2022 CN 202210496231**

(71) Applicant: **Contemporary Amperex Technology Co., Limited**
**Ningde, Fujian 352100 (CN)**

(72) Inventors:
• **CHEN, Xinwei**
**Ningde, Fujian 352100 (CN)**

• **LI, Xiangtao**
**Ningde, Fujian 352100 (CN)**
• **PAN, Xianxi**
**Ningde, Fujian 352100 (CN)**
• **HUANG, Tianyi**
**Ningde, Fujian 352100 (CN)**
• **YAN, Yu**
**Ningde, Fujian 352100 (CN)**
• **DAN, Zhimin**
**Ningde, Fujian 352100 (CN)**

(74) Representative: **Gong, Jinping**
**CocreateIP**
**Neumarkterstr. 21**
**81673 München (DE)**

(54) **ENERGY STORAGE SYSTEM CONTROL METHOD AND APPARATUS, DEVICE, STORAGE MEDIUM, AND PROGRAM PRODUCT**

(57)    This application relates to a control method, an apparatus, a device, a storage medium, and a program product for an energy storage system. The method includes: obtaining a first cluster voltage of a target battery cluster in the energy storage system; determining a second cluster voltage based on the first cluster voltage and a preset redundancy voltage, and determining an output voltage of a first regulator corresponding to the target battery cluster in the energy storage system based on a bus voltage and the second cluster voltage, where the redundancy voltage is within a regulation range of the first regulator; and controlling the output voltage of the first regulator for voltage regulation on the target battery cluster.

Obtain a first cluster voltage of a target battery cluster in an energy storage system — 201

Determine a second cluster voltage based on the first cluster voltage and a preset redundancy voltage, and determine an output voltage of a first regulator corresponding to the target battery cluster in the energy storage system based on a bus voltage and the second cluster voltage — 202

Control the first regulator to output the output voltage for voltage regulation on the target battery cluster — 203

FIG. 2

**Description**

**RELATED APPLICATION**

This application claims priority to Chinese Patent Application No. 2022104962310, filed on May 09, 2022 and entitled "CONTROL METHOD, APPARATUS, DEVICE, STORAGE MEDIUM, AND PROGRAM PRODUCT FOR ENERGY STORAGE SYSTEM", which is incorporated herein by reference in its entirety.

**TECHNICAL FIELD**

This application relates to the field of energy storage system technologies, and in particular, to a control method, an apparatus, a device, a storage medium, and a program product for an energy storage system.

**BACKGROUND**

With the rapid development of new energy technologies, energy storage systems have become one of important research directions in the field of new energy.

The existing energy storage system typically includes multiple battery clusters connected in parallel, and each battery cluster includes multiple batteries connected in series. When the energy storage system is being charged and discharged, an internal loop may occur due to presence of voltage difference between the multiple battery clusters, causing damage to batteries. Therefore, a regulator is generally provided in a battery cluster to reduce the voltage difference between battery clusters.

However, even a regulator is used to reduce the voltage difference between battery clusters, an internal loop may still occur due to inappropriate regulation.

**SUMMARY**

In view of the foregoing problems, this application provides a control method, an apparatus, a device, a storage medium, and a program product for an energy storage system, to properly adjust a voltage difference between multiple battery clusters and prevent batteries from being damaged by an internal loop.

According to a first aspect, this application provides a control method for an energy storage system. The method includes:

obtaining a first cluster voltage of a target battery cluster in the energy storage system; determining a second cluster voltage based on the first cluster voltage and a preset redundancy voltage, and determining, based on a bus voltage and the second cluster voltage, an output voltage of a first regulator corresponding to the target battery cluster in the energy storage system, where the redundancy voltage is within a regulation range of the first regulator; and controlling the first regulator to output the output voltage for voltage regulation of the target battery cluster.

In the technical solution according to this embodiment of this application, redundancy is considered for voltage regulation on the target battery cluster. In this way, voltage regulation can be implemented in a more appropriate manner, preventing batteries from being damaged by an internal loop.

In some embodiments, the determining a second cluster voltage based on the first cluster voltage and a preset redundancy voltage includes: obtaining a state of charge of the target battery cluster; and determining the second cluster voltage based on the state of charge, the first cluster voltage, and the redundancy voltage. In this embodiment of this application, both the state of charge of the batteries and redundancy are considered for voltage regulation on the target battery cluster. Therefore, more appropriate voltage regulation can be implemented, preventing the batteries from being damaged by internal loops.

In some embodiments, the determining the second cluster voltage based on the state of charge, the first cluster voltage, and the redundancy voltage includes: determining a target regulation mode based on the state of charge, where the target regulation mode includes an anti-overcharge regulation mode or an anti-overdischarge regulation mode; and using the target regulation mode to determine the second cluster voltage based on the first cluster voltage and the redundancy voltage. In the embodiments of this application, different redundancy directions are set for the anti-overcharge regulation mode and the anti-overdischarge regulation mode, the second cluster voltage is determined based on different redundancy directions, and then the output voltage of the first regulator is determined based on the second cluster voltage and the bus voltage. In this way, an internal loop caused by overcharge or overdischarge of battery clusters can be prevented through voltage regulation, and the voltage regulation is more appropriate.

In some embodiments, the using the target regulation mode to determine the second cluster voltage based on the first cluster voltage and the redundancy voltage includes: when the target regulation mode is the anti-overcharge regulation mode, obtaining a difference between the first cluster voltage and the redundancy voltage to obtain the second cluster voltage.

In some embodiments, the using the target regulation mode to determine the second cluster voltage based on the first cluster voltage and the redundancy voltage includes: when the target regulation mode is the anti-overdischarge regulation mode, obtaining a sum of the first cluster voltage and the redundancy voltage to obtain the second cluster voltage.

In some embodiments, the determining a target regulation mode based on the state of charge includes: determining that the target regulation mode is the anti-overcharge regulation mode when a value of the state of charge of the target battery cluster is greater than a first charge threshold; or determining that the target regulation mode is the anti-overdischarge regulation mode when a value of the state of charge of the target battery cluster is less than a second charge threshold.

In some embodiments, the determining an output voltage of a first regulator corresponding to the target battery cluster in an energy storage system based on a bus voltage and the second cluster voltage includes:
determining a difference between the bus voltage and the second cluster voltage as the output voltage.

In some embodiments, the method further includes: powering on a first battery cluster in multiple battery clusters of the energy storage system to obtain the bus voltage; selecting the target battery cluster from a second battery cluster other than the first battery cluster; determining a voltage difference between the first cluster voltage of the target battery cluster and the bus voltage; and when it is determined based on the voltage difference that the first regulator is to be invoked, performing the step of determining a second cluster voltage based on the first cluster voltage and a preset redundancy voltage and determining an output voltage of a first regulator corresponding to the target battery cluster in an energy storage system based on a bus voltage and the second cluster voltage. In the embodiments of this application, whether voltage regulation needs to be performed on the target battery cluster is determined based on the bus voltage and the first cluster voltage of the target battery cluster. The corresponding first regulator is invoked only when a voltage difference between the target battery cluster and other battery clusters is large and the regulating voltage is within the adjustable range of the first regulator. This can not only implement more appropriate voltage regulation, but also protect the regulator.

In some embodiments, the determining, based on the voltage difference, that the first regulator is to be invoked includes: determining that the first regulator is to be invoked, when the voltage difference is greater than a first voltage threshold and less than a second voltage threshold, where the first voltage threshold is determined based on a maximum allowable voltage difference between the multiple battery clusters, and the second voltage threshold is determined based on a maximum regulating voltage of the first regulator.

In some embodiments, the method further includes: when it is determined based on the voltage difference that the first regulator is not to be invoked, controlling the first regulator to change to a bypass state. In the embodiments of this application, the first regulator is changed to the bypass state when it is determined that the first regulator is not to be invoked. This can not only protect the regulator, but also reduce power consumption of the energy storage system.

In some embodiments, the powering on a first battery cluster in multiple battery clusters of the energy storage system to obtain the bus voltage includes: selecting, from the multiple battery clusters, a battery cluster with a first cluster voltage being within a target voltage range as the first battery cluster; and controlling a second regulator corresponding to the first battery cluster to change to a bypass state, and powering on the first battery cluster to obtain the bus voltage.

In some embodiments, the method further includes: obtaining a maximum charge difference between the multiple battery clusters when the multiple battery clusters are in a charge plateau range or a discharge plateau range; when it is determined that the maximum charge difference satisfies a preset condition, determining an output current of a third regulator corresponding to a battery cluster to be regulated; and controlling the third regulator to output the output current; where the charge plateau range is a stage of charging during which a battery voltage change rate is less than a first change rate threshold, and the discharge plateau range is a stage of discharging during which the battery voltage change rate of is less than a second change rate threshold. In the embodiments of this application, when battery clusters are in the charge plateau range or the discharge plateau range, current regulation is performed based on the states of charge of the multiple battery clusters. This can improve consistency in discharging duration or charging duration among the multiple battery clusters.

In some embodiments, the determining an output current of a third regulator corresponding to a battery cluster to be regulated includes: determining the output current based on a total current of the multiple battery clusters and a maximum allowable current and a current safety margin of a single cluster when the battery cluster to be regulated is in a charging state.

In some embodiments, the determining an output current of a third regulator connected in series with a battery cluster to be regulated includes: determining the output current based on a maximum allowable current and a current safety margin of a single cluster when the battery cluster to be regulated is in a discharging state.

According to a second aspect, this application further provides an energy storage system. The energy storage system includes a controller, at least one regulator, and multiple battery clusters connected in parallel.

The controller is configured to: obtain a first cluster voltage of a target battery cluster; determine a second cluster voltage based on the first cluster voltage and a preset redundancy voltage, and determine an output voltage of a regulator corresponding to the target battery cluster based on a bus voltage and the second cluster voltage; and control the regulator to output the output voltage for voltage regulation on the target battery cluster, where the redundancy voltage is within a regulation range of the first regulator.

In the technical solution according to the embodiments of this application, different redundancy directions are set for the anti-overcharge regulation mode and the anti-overdischarge regulation mode, the second cluster voltage is determined based on different redundancy directions, and then the output voltage of the regulator is determined based on the second cluster voltage and the bus voltage. In this way, an internal loop caused by overcharge or overdischarge of battery clusters can be prevented through voltage regulation, and the voltage regulation is more appropriate.

In some embodiments, the energy storage system further includes a bypass switch, and the bypass switch is connected in parallel with the regulator. The controller is further configured to: when it is determined that the regulator is not to be invoked, control the bypass switch to be on so that the regulator changes to a bypass state. In the embodiments of this application, the regulator is changed to the bypass state when it is determined that the regulator is not to be invoked. This can not only protect the regulator, but also reduce power consumption of the energy storage system.

In some embodiments, the energy storage system further includes a first relay, a second relay, and a precharge relay, where the first relay is connected in series with a first end of the target battery cluster, the second relay is connected in series with a second end of the target battery cluster, and the precharge relay is connected in parallel with the second relay. The controller is further configured to: when the target battery cluster is being powered on, control the first relay and the precharge relay to be on in sequence; and after a preset duration, control the second relay to be on and then control the precharge relay to be off. In the embodiments of this application, battery clusters are disconnected from the bus via the first relay, the second relay, and the precharge relay, which can protect the battery clusters. In addition, when a battery cluster is being powered on, the power-on voltage or current is adjusted via the precharge relay. This protects the battery cluster against impact from excessively high voltage or current, thereby further protecting the battery cluster.

In some embodiments, the regulator is a DCDC converter. In the embodiments of this application, the DCDC converter can regulate voltage based on the output voltage sent by the controller, thereby preventing an internal loop caused by a voltage difference between the multiple battery clusters and preventing the batteries from being damaged. Alternatively, the DCDC converter regulates current based on output current sent by the controller, thereby improving consistency in discharging duration or charging duration among the multiple battery clusters.

According to a third aspect, this application further provides a control apparatus for an energy storage system. The apparatus includes:

　　　an obtaining module, configured to obtain a first cluster voltage of a target battery cluster in the energy storage system;
　　　an output voltage determining module, configured to: determine a second cluster voltage based on the first cluster voltage and a preset redundancy voltage, and determine an output voltage of a first regulator corresponding to the target battery cluster in the energy storage system based on a bus voltage and the second cluster voltage, where the redundancy voltage is within a regulation range of the first regulator; and
　　　a first control module, configured to control the output voltage of the first regulator for voltage regulation on the target battery cluster.

In some embodiments, the output voltage determining module is configured to obtain a state of charge of the target battery cluster, and determine a second cluster voltage based on the state of charge, the first cluster voltage, and the redundancy voltage.

In some embodiments, the output voltage determining module is configured to: determine a target regulation mode based on the state of charge, where the target regulation mode includes an anti-overcharge regulation mode or an anti-overdischarge regulation mode; and use the target regulation mode to determine the second cluster voltage based on the first cluster voltage and the redundancy voltage.

In some embodiments, the output voltage determining module is configured to: when the target regulation mode is the anti-overcharge regulation mode, obtain a difference between the first cluster voltage and the redundancy voltage to obtain the second cluster voltage.

In some embodiments, the output voltage determining module is configured to: when the target regulation mode is the anti-overdischarge regulation mode, obtain a sum of the first cluster voltage and the redundancy voltage to obtain the second cluster voltage.

In some embodiments, the output voltage determining module is configured to determine a difference between the bus voltage and the second cluster voltage as the output voltage.

In some embodiments, the output voltage determining module is configured to: determine that the target regulation mode is the anti-overcharge regulation mode when a value of the state of charge of the target battery cluster is greater than a first charge threshold; or determine that the target regulation mode is the anti-overdischarge regulation mode when a value of the state of charge of the target battery cluster is less than a second charge threshold.

In some embodiments, the apparatus further includes:

a bus voltage obtaining module, configured to power on a first battery cluster in multiple battery clusters of the energy storage system to obtain the bus voltage;
a battery cluster selection module, configured to select the target battery cluster from a second battery cluster other than the first battery cluster;
a voltage difference determining module, configured to determine a voltage difference between the first cluster voltage of the target battery cluster and the bus voltage; and
a regulator invocation module, configured to: when it is determined based on the voltage difference that the first regulator is to be invoked, perform the step of determining a second cluster voltage based on the first cluster voltage and a preset redundancy voltage and determining an output voltage of a first regulator corresponding to the target battery cluster in the energy storage system based on a bus voltage and the second cluster voltage.

In some embodiments, the regulator invocation module is configured to: when the voltage difference is greater than a first voltage threshold and less than a second voltage threshold, determine that the first regulator is to be invoked, where the first voltage threshold is determined based on a maximum allowable voltage difference between the multiple battery clusters, and the second voltage threshold is determined based on a maximum regulating voltage of the first regulator.

In some embodiments, the apparatus further includes:
a bypass control module, configured to: when it is determined based on the voltage difference that the first regulator is not to be invoked, control the first regulator to change to a bypass state.

In some embodiments, the bus voltage obtaining module is configured to: select, from the multiple battery clusters, a battery cluster with a first cluster voltage being within a target voltage range as the first battery cluster; control a second regulator corresponding to the first battery cluster to change to a bypass state; and power on the first battery cluster to obtain the bus voltage.

In some embodiments, the apparatus further includes:

a charge difference obtaining module, configured to obtain a maximum charge difference between the multiple battery clusters when the multiple battery clusters are in a charge plateau range or a discharge plateau range, where the charge plateau range is a stage of charging during which a change rate of battery voltage is less than a first change rate threshold, and the discharge plateau range is a stage of discharging during which the change rate of battery voltage is less than a second change rate threshold;
an output current determining module, configured to: when it is determined that the maximum charge difference satisfies a preset condition, determine an output current of a third regulator corresponding to a battery cluster to be regulated; and
a second control module, configured to control the third regulator to output the output current.

In some embodiments, the output current determining module is configured to determine the output current based on total current of the multiple battery clusters and a maximum allowable current and a current safety margin of a single cluster when the battery cluster to be regulated is in a charging state.

In some embodiments, the output current determining module is configured to determine the output current based on a maximum allowable current and a current safety margin of a single cluster when the battery cluster to be regulated is in a discharging state.

According to a fourth aspect, this application further provides an electronic device including a memory and a processor. The memory stores a computer program, and when the computer program is executed by the processor, the method according to the first aspect is implemented.

According to a fifth aspect, this application further provides a computer readable storage medium storing a computer program. When the computer program is executed by a processor, the method according to the first aspect is implemented.

According to a sixth aspect, this application further provides a computer program product including a computer program. When the computer program is executed by a processor, the method according to the first aspect is implemented.

The foregoing description is merely an overview of the technical solutions in this application. In order to better understand the technical means in this application, to achieve implementation according to content of the specification, and to make the above and other objects, features and advantages in this application more obvious and easy to understand, the following describes specific embodiments of this application.

**BRIEF DESCRIPTION OF DRAWINGS**

Other advantages and benefits will become apparent to those of ordinary skill in the art by reading the following detailed descriptions of optional implementations. The accompanying drawings are merely intended to illustrate the purposes of the optional implementations, and should not be construed as a limitation on this application. In addition, in all the accompanying drawings, same parts are denoted by same reference signs. In the accompanying drawings:

FIG. 1 is a schematic structural diagram of an energy storage system according to some embodiments of this application;

FIG. 2 is a schematic flowchart of a control method for an energy storage system according to some embodiments of this application;

FIG. 3 is a schematic flowchart of steps for determining an output voltage of a first regulator according to some embodiments of this application;

FIG. 4 is a schematic flowchart of steps for determining an output voltage of a first regulator according to some embodiments of this application;

FIG. 5 is a schematic flowchart of a control method for an energy storage system according to some embodiments of this application;

FIG. 6 is a schematic flowchart of a control method for an energy storage system according to some embodiments of this application;

FIG. 7 is a schematic flowchart of a control method for an energy storage system according to some embodiments of this application;

FIG. 8 is a schematic structural diagram of an energy storage system according to some embodiments of this application;

FIG. 9 is a schematic structural diagram of an energy storage system according to some embodiments of this application;

FIG. 10 is a schematic structural diagram of an energy storage system according to some embodiments of this application;

FIG. 11 is a schematic structural diagram of an energy storage apparatus according to some embodiments of this application;

FIG. 12 is a schematic structural diagram of an energy storage apparatus according to some embodiments of this application;

FIG. 13 is a schematic structural diagram of an energy storage apparatus according to some embodiments of this application;

FIG. 14 is a schematic structural diagram of an energy storage apparatus according to some embodiments of this application; and

FIG. 15 is a schematic structural diagram of an electronic device according to some embodiments of this application.

**DESCRIPTION OF EMBODIMENTS**

The following describes in detail the embodiments of technical solutions in this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application belongs. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as an indication or implication of relative importance or implicit indication of the number, specific sequence or dominant-subordinate relationship of the technical features indicated. In the description of this application, "a plurality of" means at least two unless otherwise specifically stated.

The term "embodiment" described herein means that specific features, structures, or characteristics in combination with descriptions of the embodiments may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "multiple groups" means more than two (inclusive) groups, and "multiple pieces" means more than two (inclusive) pieces.

In the description of the embodiments of this application, unless otherwise specified and defined explicitly, the technical terms "mount", "connect", "join", and "fasten" should be understood in their general senses. For example, they may refer to a fixed connection, a detachable connection, or an integrated connection, may refer to a mechanical connection or an electrical connection, and may refer to a direct connection, an indirect connection through an intermediate medium, an internal connection between two elements, or an interaction between two elements. Persons of ordinary skill in the art can understand specific meanings of these terms in this application as appropriate to specific situations.

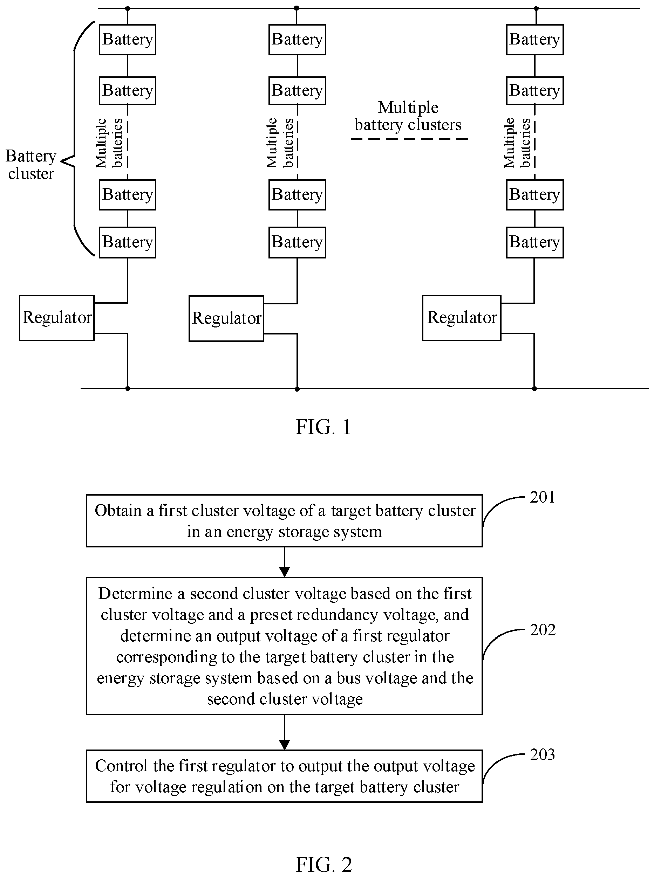

Currently, with the rapid development of new energy technologies, energy storage systems have become one of important research directions in the field of new energy. The existing energy storage system typically includes multiple battery clusters connected in parallel, and each battery cluster includes multiple batteries connected in series. When the energy storage system is being charged and discharged, an internal loop may occur due to presence of voltage difference between the multiple battery clusters, causing damage to batteries. Therefore, a regulator is generally provided in a battery cluster to reduce the voltage difference between the battery clusters, as shown in FIG. 1. However, even a regulator is used to reduce the voltage difference between battery clusters, an internal loop may still occur due to inappropriate regulation.

In the energy storage system control solution according to an embodiment of this application, a first cluster voltage of a target battery cluster in an energy storage system is obtained; a second cluster voltage is determined based on the first cluster voltage and a preset redundancy voltage, and an output voltage of a first regulator corresponding to the target battery cluster in the energy storage system is determined based on a bus voltage and the second cluster voltage; and the first regulator is controlled to output the output voltage for voltage regulation on the target battery cluster. In the embodiment of this application, redundancy is considered for voltage regulation on the target battery cluster. In this way, more appropriate voltage regulation can be implemented, preventing batteries from being damaged by internal loops.

The battery and the energy storage system disclosed in the embodiments of this application may be used without limitation in electric apparatuses such as vehicles, ships and aircrafts, or charging devices of various electric apparatuses.

According to some embodiments of this application, referring to FIG. 2, this application provides a control method for an energy storage system. The following description is based on an example that the method is applied to the foregoing energy storage system, and the method may include the following steps.

Step 201. Obtain a first cluster voltage of a target battery cluster in the energy storage system.

An acquisition circuit may be provided in the energy storage system, and the acquisition circuit may include a voltage sensor. During obtaining of the first cluster voltage, voltage of each battery in the target battery cluster may be acquired using the voltage sensor, and then the first cluster voltage of the target battery cluster is calculated based on the voltage of each battery. Alternatively, the voltage sensor may directly acquire the voltage of the target battery cluster to obtain the first cluster voltage of the target battery cluster. In the embodiments of this application, a manner of obtaining the first cluster voltage is not limited.

Step 202. Determine a second cluster voltage based on the first cluster voltage and a preset redundancy voltage, and determine an output voltage of a first regulator corresponding to the target battery cluster in the energy storage system based on a bus voltage and the second cluster voltage.

The redundancy voltage is preset. The redundancy voltage may be determined based on a maximum sampling error of the acquisition circuit, and is within a regulation range of the first regulator. The redundancy voltage is not limited in the embodiments of this application.

During voltage regulation on the target battery cluster, in order to avoid overcharging or over-discharging of the target battery cluster, the second cluster voltage may be determined based on the first cluster voltage and the redundancy voltage, and then the regulating voltage, namely the output voltage of the first regulator, is determined based on the second cluster voltage and the bus voltage.

Step 203. Control the first regulator to output the output voltage for voltage regulation on the target battery cluster.

After the output voltage of the first regulator is determined, the output voltage may be sent to the first regulator to control the first regulator to output the output voltage, thereby regulating the voltage of the target battery cluster.

For example, if the first cluster voltage of the target battery cluster is lower than cluster voltages of other battery clusters, the output voltage of the first regulator is large, so that a difference between the first cluster voltage of the target battery cluster and the cluster voltages of other battery clusters is small, for example, less than 5 V. Alternatively, if the first cluster voltage of the target battery cluster is higher than the cluster voltages of other battery clusters, the output voltage of the first regulator is small, so that the difference between the cluster voltage of the target battery cluster and the cluster voltages of other battery clusters is small.

In the foregoing embodiment, the first cluster voltage of the target battery cluster in the energy storage system is obtained; the second cluster voltage is determined based on the first cluster voltage and the preset redundancy voltage, and the output voltage of the first regulator corresponding to the target battery cluster in the energy storage system is determined based on the bus voltage and the second cluster voltage; and the first regulator is controlled to output the output voltage for voltage regulation on the target battery cluster. In conventional technology, when the first regulator is used for voltage regulation, batteries may be damaged by excessive regulation by the first regulator due to cluster voltage sampling errors. In this embodiment of this application, redundancy is considered for voltage regulation on the target battery cluster, which can prevent excessive regulation by the first regulator and implement more appropriate voltage regulation, thereby preventing batteries from being damaged by internal loops.

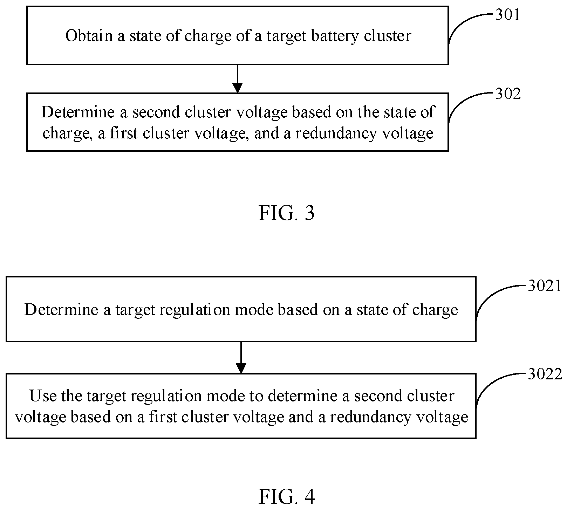

According to some embodiments of this application, referring to FIG. 3, the process of determining a second cluster voltage based on the first cluster voltage and a preset redundancy voltage may include the following steps.

Step 301. Obtain a state of charge of the target battery cluster.

The state of charge (State of Charge, SOC) is used to represent the remaining power of a battery. For example, a value of the state of charge of a battery is 80%, indicating that the remaining power of the battery is 80% of the total power.

The process of obtaining a state of charge may include: determining the state of charge of each battery based on the battery voltage acquired by the acquisition circuit and a rated voltage of each battery in the target battery cluster, and then determining the state of charge of the target battery cluster based on the state of charge of each battery. In practical application, the state of charge of the target battery cluster may be determined by other means, which is not limited in the embodiments of this application.

Step 302. Determine the second cluster voltage based on the state of charge, the first cluster voltage, and the redundancy voltage.

Different regulation modes are determined depending on the state of charge. For example, a value of the state of charge is 95%, indicating that the battery has sufficient power. If still charged, the battery is likely to be damaged due to overcharge. Alternatively, a value of the state of charge is 5%, indicating that the battery has insufficient power. If still discharged, the battery is likely to be damaged due to overdischarge. Therefore, with regard to different states of charge, an appropriate regulation mode needs to be used to determine the second cluster voltage based on the first cluster voltage and the redundancy voltage, and then the output voltage of the first regulator is determined based on the second cluster voltage and the bus voltage, so as to prevent the batteries from being damaged due to overcharge or overdischarge.

It can be understood that if the state of charge indicates that continuing to charge or discharge a battery does not damage the battery, the output voltage of the first regulator may alternatively be determined based only on the first cluster voltage and the bus voltage, without considering redundancy.

In the foregoing embodiment, the state of charge of the target battery cluster is obtained, and the second cluster voltage is determined based on the state of charge, the first cluster voltage, and the redundancy voltage. In this embodiment of this application, both the state of charge of the batteries and redundancy are considered for voltage regulation on the target battery cluster. Therefore, more appropriate voltage regulation can be implemented, preventing the batteries from being damaged by internal loops.

According to some embodiments of this application, referring to FIG. 4, the process of determining the second cluster voltage based on the state of charge, the first cluster voltage, and the redundancy voltage may include the following steps.

Step 3021. Determine a target regulation mode based on the state of charge.

The target regulation mode includes an anti-overcharge regulation mode or an anti-overdischarge regulation mode.

After the state of charge is obtained, the target regulation mode may be determined based on the value of the state of charge. Optionally, when the value of the state of charge of the target battery cluster is greater than a first charge threshold, it is determined that the target regulation mode is the anti-overcharge regulation mode; when the value of the state of charge of the target battery cluster is less than a second charge threshold, it is determined that the target regulation mode is the anti-overdischarge regulation mode.

For example, the first charge threshold is 90% and the second charge threshold is 10%. Assuming that the obtained value of the state of charge is 95%, greater than the first charge threshold, it is determined that the target regulation mode is the anti-overcharge regulation mode. Assuming that the obtained value of the state of charge is 5%, less than the second charge threshold, it is determined that the target regulation mode is the anti-overdischarge regulation mode.

Step 3022. Use the target regulation mode to determine the second cluster voltage based on the first cluster voltage and the redundancy voltage.

Directions of redundancy are different for different regulation modes, that is, the redundancy voltage is used in different ways.

In some embodiments of this application, the step of using the target regulation mode to determine the second cluster voltage based on the first cluster voltage and the redundancy voltage may include: when the target regulation mode is the anti-overcharge regulation mode, obtaining a difference between the first cluster voltage and the redundancy voltage to obtain the second cluster voltage.

Correspondingly, the determining an output voltage of a first regulator corresponding to the target battery cluster in the energy storage system based on a bus voltage and the second cluster voltage may include: determining a difference between the bus voltage and the second cluster voltage as the output voltage.

For example, the target regulation mode is the anti-overcharge regulation mode, the first cluster voltage is 1490 V, the redundancy voltage is 4 V, and the bus voltage is 1500 V. The difference between the first cluster voltage and the redundancy voltage is obtained as 1486 V, that is, the second cluster voltage is 1486 V. Then, the difference of 14 V between the bus voltage 1500 V and the second cluster voltage 1486 V is determined as the output voltage of the first regulator.

It can be understood that the second cluster voltage is determined based on the difference between the first cluster voltage and the redundancy voltage, the output voltage of the first regulator is determined based on the second cluster voltage and the bus voltage, and then it is highly probable that a sum of the output voltage of the first regulator and the first cluster voltage of the target battery cluster is greater than the first cluster voltages of other battery clusters. In this way, the target battery cluster may be discharged or neither discharged nor charged. This can avoid the target battery cluster from being overcharged, thereby preventing the batteries from being damaged.

In some embodiments of this application, the step of using the target regulation mode to determine the second cluster voltage based on the first cluster voltage and the redundancy voltage may include: when the target regulation mode is the anti-overdischarge regulation mode, obtaining a sum of the first cluster voltage and the redundancy voltage to obtain the second cluster voltage.

Correspondingly, the determining an output voltage of a first regulator corresponding to the target battery cluster in the energy storage system based on a bus voltage and the second cluster voltage may include: determining a difference between the bus voltage and the second cluster voltage as the output voltage.

For example, the target regulation mode is the anti-overdischarge regulation mode, the first cluster voltage is 1300 V, the redundancy voltage is 4 V, and the bus voltage is 1310 V. The sum of the first cluster voltage and the redundancy voltage is obtained as 1304 V, that is, the second cluster voltage is 1304 V. Then, the difference of 6 V between the bus voltage 1310 V and the second cluster voltage 1304 V is determined as the output voltage of the first regulator.

It can be understood that the second cluster voltage is determined based on the sum of the first cluster voltage and the redundancy voltage, the output voltage of the first regulator is determined based on the second cluster voltage and the bus voltage, and then it is highly probable that a sum of the output voltage of the first regulator and the first cluster voltage of the target battery cluster is less than the first cluster voltages of other battery clusters. In this way, the target battery cluster may be charged or neither discharged nor charged. This can avoid the target battery cluster from being overdischarged, thereby preventing the batteries from being damaged.

In some embodiments of this application, the target regulation mode further includes a normal regulation mode. When the value of the state of charge of the target battery cluster is less than or equal to a first charge threshold and greater than or equal to a second charge threshold, it is determined that the target regulation mode is the normal regulation mode. In the normal regulation mode, the redundancy voltage is not considered, and the output voltage of the first regulator is determined based on the first cluster voltage and the bus voltage.

In the foregoing embodiments, the target regulation mode is determined based on the state of charge; and the target regulation mode is used to determine the second cluster voltage based on the first cluster voltage and the redundancy voltage. In the embodiments of this application, different redundancy directions are set for the anti-overcharge regulation mode and the anti-overdischarge regulation mode, the second cluster voltage is determined based on different redundancy directions, and then the output voltage of the first regulator is determined based on the second cluster voltage and the bus voltage. In this way, an internal loop caused by overcharge or overdischarge of battery clusters can be prevented through voltage regulation, and the voltage regulation is more appropriate.

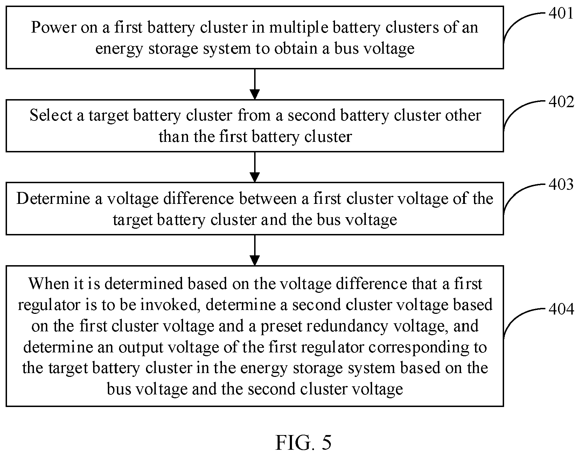

According to some embodiments of this application, referring to FIG. 5, the embodiment of this application may further include the following steps.

Step 401. Power on a first battery cluster in the multiple battery clusters of the energy storage system to obtain the bus voltage.

In the case of powering on the multiple battery clusters of the energy storage system, the first battery cluster in the multiple battery clusters is powered on first to obtain the bus voltage.

In some embodiments of this application, the process of obtaining the bus voltage may include: selecting, from the multiple battery clusters, a battery cluster with a first cluster voltage being within a target voltage range as the first battery cluster; and controlling a second regulator corresponding to the first battery cluster to change to a bypass state, and powering on the first battery cluster to obtain the bus voltage.

The target voltage range may be determined based on one of a maximum cluster voltage, a minimum cluster voltage, and an average cluster voltage of the multiple battery clusters. For example, a battery cluster with the highest first cluster voltage may be selected from the multiple battery clusters as the first battery cluster, or a battery cluster with the lowest first cluster voltage may be selected from the multiple battery clusters as the first battery cluster, or a battery cluster with the first cluster voltage being the average value may be selected from the multiple battery clusters as the first battery cluster. The embodiments of this application do not limit the target voltage range or the manner of selecting the first battery cluster.

Step 402. Select the target battery cluster from a second battery cluster other than the first battery cluster.

After the first battery cluster is powered on, any one battery cluster is selected as the target battery cluster from the second battery cluster other than the first battery cluster in the multiple battery clusters.

Step 403. Determine a voltage difference between the first cluster voltage of the target battery cluster and the bus voltage.

The voltage difference between the first cluster voltage of the target battery cluster and the bus voltage is calculated. For example, if the first cluster voltage of the target battery cluster is 1490 V and the bus voltage is 1500 V, the voltage difference is determined as 10 V

Step 404. When it is determined based on the voltage difference that the first regulator is to be invoked, perform the step of determining a second cluster voltage based on the first cluster voltage and a preset redundancy voltage and determining an output voltage of a first regulator corresponding to the target battery cluster in the energy storage system based on a bus voltage and the second cluster voltage.

Whether the voltage difference satisfies a condition of invocation is determined. If the condition of invocation is satisfied, it is determined that the first regulator is to be invoked. The second cluster voltage is determined based on the first cluster voltage and the preset redundancy voltage, and then the output voltage of the first regulator corresponding to the target battery cluster in the energy storage system is determined based on the second cluster voltage and the bus voltage. The foregoing condition of invocation may be determined based on a maximum allowable voltage difference between the multiple battery clusters and a maximum regulating voltage of the first regulator.

According to some embodiments of this application, the step of determining based on the voltage difference that the first regulator is to be invoked may include: when the voltage difference is greater than a first voltage threshold and less than a second voltage threshold, determining that the first regulator is to be invoked, where the first voltage threshold is determined based on a maximum allowable voltage difference between the multiple battery clusters, and the second voltage threshold is determined based on a maximum regulating voltage of the first regulator.

For example, if the maximum allowable voltage difference between the multiple battery clusters is 5 V, the first voltage threshold may be set to 5 V. If the maximum regulating voltage of the first regulator is 15 V, the second voltage threshold may be set to 15 V. If the voltage difference between the target battery cluster and the bus voltage is greater than 5 V and less than 15 V, it indicates that a voltage difference between the target battery cluster and other battery clusters exceeds the maximum allowable voltage difference. In this case, voltage regulation needs to be performed on the target battery cluster, and the regulating voltage is within the adjustable range of the first regulator. Therefore, it is determined that the first regulator is to be invoked.

In the foregoing embodiments, the first battery cluster in the multiple battery clusters of the energy storage system is powered on to obtain the bus voltage; the target battery cluster is selected from the second battery cluster other than the first battery cluster; the voltage difference between the first cluster voltage of the target battery cluster and the bus voltage is determined; when it is determined based on the voltage difference that the first regulator is to be invoked, the step of determining a second cluster voltage based on the first cluster voltage and a preset redundancy voltage and determining an output voltage of a first regulator corresponding to the target battery cluster in the energy storage system based on a bus voltage and the second cluster voltage is performed. In the embodiments of this application, whether voltage regulation needs to be performed on the target battery cluster is determined based on the bus voltage and the first cluster voltage of the target battery cluster. The corresponding first regulator is invoked only when a voltage difference between the target battery cluster and other battery clusters is large and the regulating voltage is within the adjustable range of the first regulator. This can not only implement more appropriate voltage regulation, but also protect the regulator.

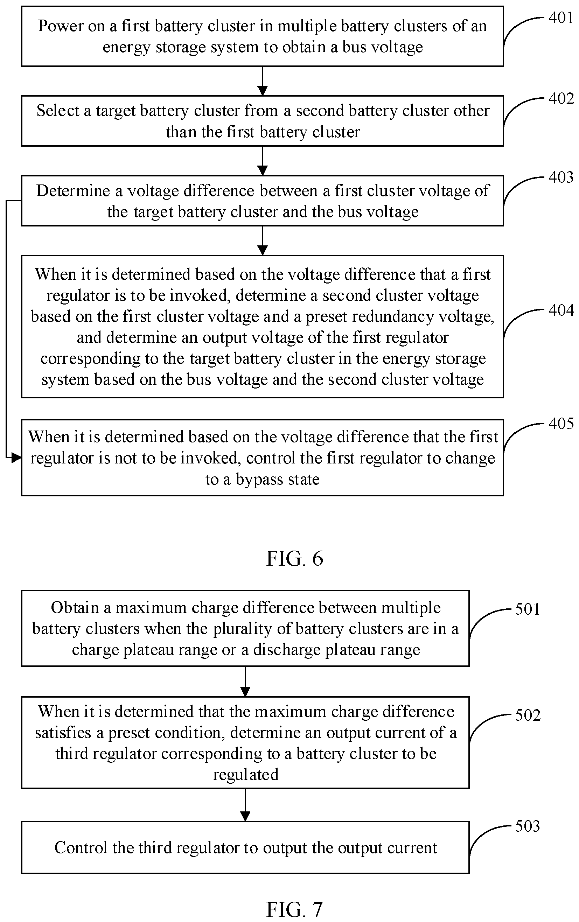

According to some embodiments of this application, referring to FIG. 6, this embodiment of this application may further include the following step.

Step 405. When it is determined based on the voltage difference that the first regulator is not to be invoked, control the first regulator to change to a bypass state.

If the voltage difference between the first cluster voltage of the target battery cluster and the bus voltage is less than the first voltage threshold or greater than the second voltage threshold, it is determined that the first regulator is not to be invoked.

For example, the voltage difference between the first cluster voltage of the target battery cluster and the bus voltage is less than 5 V, indicating that the voltage difference between the target battery cluster and other battery clusters is within the maximum allowable voltage difference. In this case, voltage regulation may not be performed on the target battery cluster, and it is determined that the first regulator is not to be invoked. Alternatively, the voltage difference between the first cluster voltage of the target battery cluster and the bus voltage is greater than 15 V, indicating that the regulating voltage is beyond the adjustable range of the first regulator. In this case, it is also determined that the first regulator is not to be invoked, so as to avoid damage to the first regulator.

After it is determined that the first regulator is not to be invoked, the first regulator is controlled to change to the bypass state. For example, the energy storage system further includes a bypass switch connected in parallel with the first regulator. When the bypass switch is controlled to be closed, the first regulator can be changed to the bypass state. Alternatively, a DCDC converter is used as the first regulator. The DCDC converter is provided with an H-bridge. Short-circuiting a bridge arm of the H-bridge can also change the first regulator to the bypass state. In practical application, the manner of controlling the first regulator to change to the bypass state is not limited thereto, and other manners may also be used.

In the foregoing embodiments, when it is determined based on the voltage difference that the first regulator is not to be invoked, the first regulator is controlled to change to the bypass state. In the embodiments of this application, the first regulator is changed to the bypass state when it is determined that the first regulator is not to be invoked. This can not only protect the regulator, but also reduce power consumption of the energy storage system.

According to some embodiments of this application, referring to FIG. 7, this embodiment of this application may further include the following steps.

Step 501. Obtain a maximum charge difference between the multiple battery clusters when the multiple battery clusters are in a charge plateau range or a discharge plateau range.

The charge plateau range is a stage of charging during which a change rate of battery voltage is less than a first change rate threshold, and the discharge plateau range is a stage of discharging during which the change rate of battery voltage is less than a second change rate threshold When a battery is being charged, the change rate of battery voltage is high at the start phase and end phase of charging, and is low in the middle phase of charging. The phase during which the change rate of battery voltage is low is the charge plateau range. Likewise, when a battery is being discharged, the change rate of battery voltage is low in the middle phase of discharging, and this phase is the discharge plateau range. The first change rate threshold may be the same as or different from the second change rate threshold. The first change rate threshold and the second change rate threshold are not limited in the embodiments of this application.

When the multiple battery clusters are in the charge plateau range or the discharge plateau range, the state of charge of each battery cluster is first obtained, the highest state of charge and the lowest state of charge are found out, and then a difference between the highest state of charge and the lowest state of charge is calculated to obtain the maximum charge difference.

Step 502. When it is determined that the maximum charge difference satisfies a preset condition, determine an output current of a third regulator corresponding to a battery cluster to be regulated.

Whether the maximum charge difference is greater than a preset charge value is determined. If the maximum charge difference is greater than the preset charge value, it is determined that the maximum charge difference satisfies the preset condition. For example, the maximum charge difference is 12%, greater than the preset charge value of 10%, and it is determined that the maximum charge difference satisfies the preset condition. The embodiments of this application do not limit the preset charge value.

It is determined that the maximum charge difference satisfies the preset condition, indicating that the battery clusters differ greatly in the state of charge. In this case, some of the battery clusters need to be regulated, so as to avoid internal loop caused by the difference between the states of charge. In practical application, a battery cluster with the highest state of charge or a battery cluster with the lowest state of charge may be used as the battery cluster to be regulated, and then the output current of the third regulator corresponding to the battery cluster to be regulated is determined.

In some embodiments of this application, the step of determining an output current of a third regulator corresponding to a battery cluster to be regulated may include: determining the output current based on total current of the multiple battery clusters and a maximum allowable current and a current safety margin of a single cluster when the battery cluster to be regulated is in a charging state.

For example, there are five battery clusters in total, and two battery clusters are to be regulated. If the battery clusters to be regulated are in the charging state, the output current of the third regulator is determined according to an equation (1):

$$I_{regulated} = (I_{total} - 3*I_{max})/2*0.95 \text{ ------------ } (1)$$

where, $I_{regulated}$ is the output current of the third regulator, $I_{total}$ is the total current of the multiple battery clusters, $I_{max}$ is the maximum allowable current of a single cluster, and 0.95 is the current safety margin. 2 and 3 in the equation, as well as the current safety margin can be set based on an actual situation.

It can be understood that the charging speed can be adjusted by regulating the current of battery cluster through the third regulator, making the multiple battery clusters more consistent in charging duration.

In some embodiments of this application, the step of the determining an output current of a third regulator in series connection with a battery cluster to be regulated may include: determining the output current based on a maximum allowable current and a current safety margin of a single cluster when the battery cluster to be regulated is in a discharging state.

For example, there are five battery clusters in total, and two battery clusters are to be regulated. If the battery clusters to be regulated are in the discharging state, the output current of the third regulator is determined according to an equation (2):

$$I_{regulated} = I_{max}*0.95 \text{ --------- (2)}$$

where, $I_{regulated}$ is the output current of the third regulator, $I_{max}$ is the maximum allowable current of a single cluster, and 0.95 is the current safety margin. The current safety margin may be set based on the actual situation.

Step 503. Control the third regulator to output the output current.

After the output current of the third regulator is determined, the output current is sent to the third regulator to control the third regulator to output the output current.

In the foregoing embodiments, the maximum charge difference between the multiple battery clusters is obtained when the multiple battery clusters are in the charge plateau range or the discharge plateau range. When it is determined that the maximum charge difference satisfies the preset condition, the output current of the third regulator corresponding to the battery cluster to be regulated is determined. In the embodiments of this application, when battery clusters are in the charge plateau range or the discharge plateau range, current regulation is performed based on the states of charge of the multiple battery clusters. This can improve consistency in discharging duration or charging duration among the multiple battery clusters.

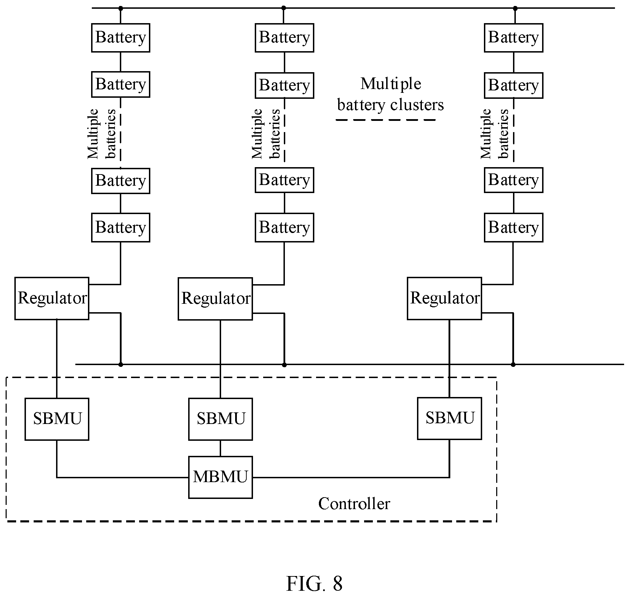

According to some embodiments of this application, referring to FIG. 8, this application provides an energy storage system. The energy storage system includes a controller, at least one regulator, and multiple battery clusters connected in parallel. The controller is configured to: obtain a first cluster voltage of a target battery cluster; determine a second cluster voltage based on the first cluster voltage and a preset redundancy voltage, and determine an output voltage of a regulator corresponding to the target battery cluster based on a bus voltage and the second cluster voltage; and control the regulator to output the output voltage for voltage regulation on the target battery cluster, where the redundancy voltage is within a regulation range of the regulator.

The energy storage system may include a controller, at least one regulator, and multiple battery clusters connected in parallel. The controller may include a master battery management system MBMU (Master Battery Management Unit, MBMU) and multiple slave battery management units SBMUs (Slave Battery Management Unit, SBMU). The MBMU is connected to the multiple SBMUs, and each SBMU is connected to one battery cluster correspondingly. The MBMU can perform management and troubleshooting of an entire energy storage system, and communicate with the energy management system (Energy Management System, EMS), and the SBMU can control the battery cluster connected to it.

The energy storage system further includes an acquisition circuit, and the acquisition circuit may include a voltage sensor, a current sensor, a temperature sensor, and the like. The voltage sensor can acquire a first cluster voltage of a battery cluster, the current sensor can acquire a cluster current of a battery cluster, and the temperature sensor can acquire temperature of a battery cluster. The acquisition circuit sends the acquired first cluster voltage, cluster current, and temperature to the corresponding SBMUs, and the multiple SBMUs then send the first cluster voltages, cluster currents, and temperatures of the corresponding clusters to the MBMU. It should be noted that the acquisition circuit and a connection relationship thereof are not indicated in FIG. 8.

Before powering on a battery cluster, the SBMU needs to perform a self-test. The self-test of the SBMU includes at least the following: whether the first cluster voltage and temperature of the corresponding cluster are complete and fault-free; whether high-voltage sampling of the corresponding cluster is fault-free; whether current sampling of the corresponding cluster is fault-free, and whether switches of the corresponding cluster are fault-free. If the SBMU has passed the self-test, the self-test pass status is sent to the MBMU, and a wake-up signal is sent to the corresponding regulator.

Then, after determining that a power-on condition is satisfied, the SBMU controls the corresponding cluster to be powered on. Where, the power-on condition includes: a high-voltage-on command is received from the MBMU, feedback on successful self-test is received from a regulator for the corresponding cluster, a regulator (second-stage) for the corresponding cluster is on, and there is no fault that prohibits application of a high voltage.

Before powering on a battery cluster, the MBMU needs to be powered on at a low voltage and self-tested. After the self-test is successful, the MBMU receives the self-test pass status sent by the SBMU for each battery cluster and determines that each SBMU has passed the self-test. If a high-voltage-on command is received from a PCS (Power Conversion System, power conversion system), the first battery cluster is selected from the multiple battery clusters and the high-voltage-on command is sent to the SBMU for the first battery cluster, so that the SBMU for the first battery cluster controls the first battery cluster to power on and obtains the bus voltage. Then, the MBMU selects the target battery cluster from the second battery cluster other than the first battery cluster, obtains the first cluster voltage of the target battery cluster from the acquisition circuit, determines the second cluster voltage based on the first cluster voltage of the target battery cluster and the redundancy voltage, and then determines the output voltage of the regulator corresponding to the target battery cluster based on the second cluster voltage and the bus voltage. After that, the MBMU sends the output voltage to the regulator corresponding to the target battery cluster. When the SBMU controls the target battery cluster to power on, the regulator corresponding to the target battery cluster outputs the output voltage to implement voltage regulation on the target battery cluster.

In some embodiments of this application, the MBMU obtains a state of charge of the target battery cluster; determines a target regulation mode based on the state of charge; when the target regulation mode is an anti-overcharge regulation mode, obtains a difference between the first cluster voltage and the redundancy voltage to obtain the second cluster voltage; and determines the difference between the bus voltage and the second cluster voltage as the output voltage. When the target regulation mode is the anti-overdischarge regulation mode, a sum of the first cluster voltage and the redundancy voltage is obtained to obtain the second cluster voltage; and the difference between the bus voltage and the second cluster voltage is determined as the output voltage.

In some embodiments of this application, the MBMU reports power-on success information to the PCS after receiving the power-on success information from the corresponding SBMU of each battery cluster. If the MBMU has not received the power-on success information from the corresponding SBMU of each battery cluster before timeout, the MBMU reports power-on failure information to the PCS. The timeout duration may be longer than 15 seconds (s), which is not limited in the embodiments of this application.

In some embodiments of this application, the MBMU obtains a maximum charge difference between the multiple battery clusters when the multiple battery clusters are in a charge plateau range or a discharge plateau range. When it is determined that the maximum charge difference satisfies a preset condition, the MBMU determines an output current of the regulator corresponding to the battery cluster to be regulated. Then, the MBMU sends the output current to the regulator and controls the regulator to output the output current for current regulation.

In the foregoing embodiments, the energy storage system includes a controller, at least one regulator, and multiple battery clusters connected in parallel. The controller obtains a first cluster voltage of a target battery cluster; determines a second cluster voltage based on the first cluster voltage and a preset redundancy voltage, and determines an output voltage of a regulator corresponding to the target battery cluster based on a bus voltage and the second cluster voltage; and controls the regulator to output the output voltage for voltage regulation on the target battery cluster. In the embodiments of this application, in the case of performing regulation on the target battery cluster, different redundancy directions are set for the anti-overcharge regulation mode and the anti-overdischarge regulation mode, and the output voltage of the regulator is determined based on different redundancy directions. In this way, an internal loop caused by overcharge or overdischarge of battery clusters can be prevented through voltage regulation, and the voltage regulation is more appropriate.

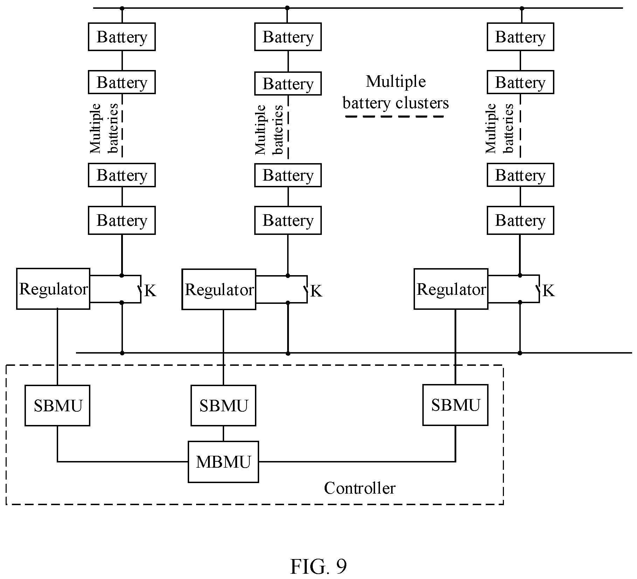

According to some embodiments of this application, referring to FIG. 9, the energy storage system further includes a bypass switch K, and the bypass switch K is connected in parallel with the regulator. The controller is further configured to: when it is determined that the regulator is not to be invoked, control the bypass switch K to be on so that the regulator changes to a bypass state.

After selecting the target battery cluster from the second battery cluster other than the first battery cluster, the MBMU determines a voltage difference between the first cluster voltage of the target battery cluster and the bus voltage; when it is determined based on the voltage difference that the regulator corresponding to the target battery cluster is to be invoked, determines the second cluster voltage based on the first cluster voltage and the redundancy voltage, and then determines the output voltage of the regulator corresponding to the target battery cluster based on the second cluster voltage and the bus voltage. When it is determined based on the voltage difference that the regulator is not to be invoked, the regulator is controlled to change to the bypass state.

In some embodiments of this application, when the voltage difference is greater than a first voltage threshold and less than a second voltage threshold, it is determined that the first regulator is to be invoked; and when the voltage difference is less than the first voltage threshold or greater than the second voltage threshold, it is determined that the first regulator is not to be invoked. The first voltage threshold is determined based on a maximum allowable voltage difference between the multiple battery clusters, and the second voltage threshold is determined based on a maximum regulating voltage of the first regulator.

In practical application, the first voltage threshold may be set to 5 V and the second voltage threshold may be set to 15 V. The first voltage threshold and the second voltage threshold are not limited in the embodiments of this application.

The energy storage system further includes a bypass switch K connected in parallel with the regulator. When it is determined that the regulator is not to be invoked, the MBMU can send a control signal to the SBMU, and then the SBMU controls the bypass switch K to be on. In this way, the regulator can change to the bypass state. It should be noted that a connection relationship between the bypass switch and the SBMU is not indicated in FIG. 9.

In the foregoing embodiment, the energy storage system further includes the bypass switch. When it is determined that the regulator is not to be invoked, the controller controls the bypass switch to be on so that the regulator changes to the bypass state. In the embodiments of this application, the first regulator is changed to the bypass state when it is determined that the first regulator is not to be invoked. This can not only protect the regulator, but also reduce power consumption of the energy storage system.

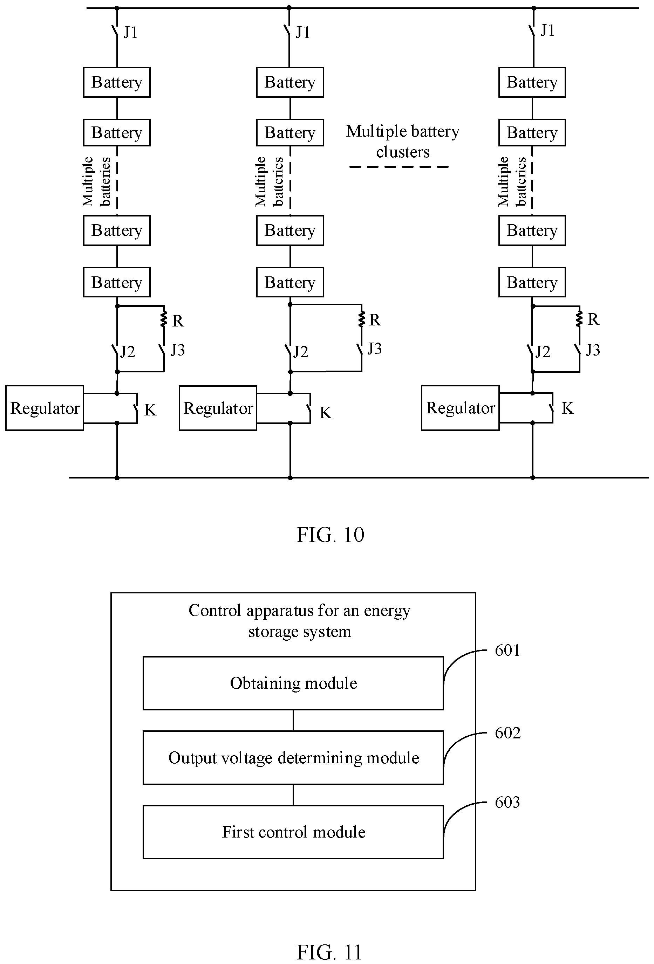

According to some embodiments of this application, referring to FIG. 10, the energy storage system further includes a first relay 11, a second relay J2, and a precharge relay J3, where the first relay J1 is connected in series with a first end of the target battery cluster, the second relay J2 is connected in series with a second end of the target battery cluster, and the precharge relay J3 is connected in parallel with the second relay J2. The controller is further configured to: when powering on the target battery cluster, control the first relay J1 and the precharge relay J3 to be on in sequence; and after a preset duration, control the second relay J2 to be on and then control the precharge relay J3 to be off.

The energy storage system further includes the first relay 11, the second relay J2, and the precharge relay J3. The first relay J1 is connected in series with the first end of the target battery cluster, the second relay J2 is connected in series with the second end of the target battery cluster, and the precharge relay J3 is connected in parallel with the second relay J2. As shown in FIG. 10, the precharge relay J3 may also be connected in series with a resistor R. It should be noted that connection relationships between the SBMU and the first relay 11, the second relay J2, the precharge relay J3, and the bypass switch K, as well as a connection relationship between the MBMU and the SBMU, are not indicated in FIG. 10.

When the target battery cluster is being powered on, the SBMU corresponding to the target battery cluster controls the first relay J1 and the precharge relay J3 to be on in sequence. After the preset duration, the SBMU controls the second relay J2 to be on and then controls the precharge relay J3 to be off. After controlling the precharge relay J3 to be off, the SBMU reports to the MBMU the information indicating successful power-on of the target battery cluster.

The preset duration may be determined based on a voltage difference between two terminals of the second relay J2 being less than the preset voltage. The preset voltage may be set to 5 V if the battery cluster is the first one to be powered on among the multiple battery clusters. If the battery cluster to be powered on is not the first battery cluster, the preset voltage may be set to 15 V The embodiment of this application does not limit the preset voltage.

In some embodiments of this application, if the voltage difference between two terminals of the second relay J2 remains not less than the preset voltage within a period of time longer than the timeout duration, for example, 5 seconds (s), it is determined that powering on the target battery cluster failed.

In some embodiments of this application, an interval of 100 ms may be present between the first relay J1 being on and the precharge relay J3 being on, and an interval of 100 ms may also be present between the second relay J2 being on and the precharge relay J3 being off. A length of the interval is not limited in the embodiments of this application.

In some embodiments of this application, when a target battery cluster other than the first battery cluster is being powered on, if voltage regulation is required, the SBMU determines, after the precharge relay J3 is on, whether the regulator corresponding to the target battery cluster can perform regulation properly. If the regulator corresponding to the target battery cluster can perform regulation properly, the SBMU controls the second relay J2 to be on, and then controls the precharge relay J3 to be off. If the regulator corresponding to the target battery cluster cannot perform regulation properly after the precharge relay J3 is on, the SBMU determines that powering on the target battery cluster failed.

In some embodiments of this application, if the target battery cluster or the regulator corresponding to the target battery cluster triggers a fault that requires power-off in a preset fault list, the SBMU corresponding to the target battery cluster sends a high-voltage-off request to the MBMU. If the SBMU receives a high-voltage-off command from the MBMU, the SBMU can regulate a cluster current of the target battery cluster through the regulator, control the second relay J2 and the first relay J1 to be off in sequence after the cluster current is less than a preset current value, and then report high-voltage-off success information to the MBMU. The preset current value may be 15 A, which is not limited in the embodiments of this application.

In the foregoing embodiments, the energy storage system further includes the first relay, the second relay and the precharge relay. During power-on of the target battery cluster, the controller controls the first relay and the precharge relay to be on in sequence, and after the preset duration, controls the second relay to be on, and then controls the precharge relay to be off. In the embodiments of this application, battery clusters are disconnected from the bus via the first relay, the second relay, and the precharge relay, which can protect the battery clusters. In addition, when a battery cluster is being powered on, the power-on voltage or current is adjusted via the precharge relay. This protects the battery cluster against impact from excessively high voltage or current, thereby further protecting the battery cluster.

According to some embodiments of this application, the regulator is a DCDC (Direct Current/Direct Current) converter.

The SBMU sends a wake-up signal to the DCDC converter after passing the self-test. After receiving the wake-up signal, the DCDC converter is powered on at a low voltage, and performs self-test. The self-test of the DCDC converter includes at least the following: a low-voltage power source supplies electricity properly, and no preset fault is triggered.

After passing the self-test, the DCDC converter receives an output voltage or output current sent by the MBMU, and performs output based on the output voltage or output current sent by the MBMU.

In some embodiments of this application, if the DCDC converter triggers a preset fault, the fault level is reported to the MBMU and the SBMU for the corresponding cluster, and then corresponding output is performed under the control of the MBMU.

In some embodiments of this application, if a hibernation condition is satisfied, the DCDC converter is powered off, saves data, and enters the hibernation state. The hibernation condition includes at least one of the following: loss of wake-up signal, invalid voltage at the high-voltage input terminal; timeout for low-voltage output current being 0, for example, longer than 30 min; and receipt of a hibernation permitted command from the MBMU. The embodiments of this application do not limit the timeout duration for low-voltage output current being 0.

In some embodiments of this application, the input terminal of the DCDC converter may be connected in parallel with the corresponding battery cluster or may be connected to a power source, which is not limited in the embodiments of this application.

In some embodiments of this application, the DCDC converter may be an isolated DCDC converter or a non-isolated DCDC converter, which is not limited in the embodiments of this application.

In the foregoing embodiments, the regulator is the DCDC converter, and the DCDC converter can regulate the voltage according to the output voltage sent by the controller, thereby avoiding internal loops caused by voltage difference between the multiple battery clusters and preventing the batteries from being damaged. Alternatively, the DCDC converter regulates current based on output current sent by the controller, thereby improving consistency in discharging duration or charging duration among the multiple battery clusters.

It should be understood that although the steps in the foregoing flowchart are displayed in sequence as indicated by the arrows, these steps are not necessarily executed in the order indicated by the arrows. Unless otherwise specified herein, the execution of these steps is not strictly limited to such order, and these steps can be executed in another order. In addition, at least some of the steps in the foregoing figure may include multiple steps or stages. These steps or stages are not necessarily executed simultaneously but may be executed at different points of time, and the order of executing these steps or stages is not mandatory either. Instead, the execution of them may alternate with execution of other steps or at least part of steps or stages in other steps.

In an embodiment, referring to FIG. 11, a control apparatus for an energy storage system is provided, which is applied to an energy storage system. The apparatus includes:

an obtaining module 601, configured to obtain a first cluster voltage of a target battery cluster in the energy storage system;

an output voltage determining module 602, configured to: determine a second cluster voltage based on the first cluster voltage and a preset redundancy voltage, and determine an output voltage of a first regulator corresponding to the target battery cluster in the energy storage system based on a bus voltage and the second cluster voltage, where the redundancy voltage is within a regulation range of the first regulator; and

a first control module 603, configured to control the output voltage of the first regulator for voltage regulation on the target battery cluster.

In some embodiments of this application, the output voltage determining module 602 is configured to obtain a state of charge of the target battery cluster, and determine the second cluster voltage based on the state of charge, the first cluster voltage, and the redundancy voltage.

In some embodiments of this application, the output voltage determining module 602 is configured to: determine a target regulation mode based on the state of charge, where the target regulation mode includes an anti-overcharge regulation mode or an anti-overdischarge regulation mode; and use the target regulation mode to determine the second cluster voltage based on the first cluster voltage and the redundancy voltage.

In some embodiments of this application, the output voltage determining module 602 is configured to: when the target regulation mode is the anti-overcharge regulation mode, obtain a difference between the first cluster voltage and the redundancy voltage to obtain the second cluster voltage.

In some embodiments of this application, the output voltage determining module 602 is configured to: when the target regulation mode is the anti-overdischarge regulation mode, obtain a sum of the first cluster voltage and the redundancy voltage to obtain the second cluster voltage.

In some embodiments of this application, the output voltage determining module 602 is configured to determine a difference between the bus voltage and the second cluster voltage as the output voltage.

In some embodiments of this application, the output voltage determining module 602 is configured to: determine that the target regulation mode is the anti-overcharge regulation mode when a value of the state of charge of the target battery cluster is greater than a first charge threshold; or determine that the target regulation mode is the anti-overdischarge regulation mode when a value of the state of charge of the target battery cluster is less than a second charge threshold.

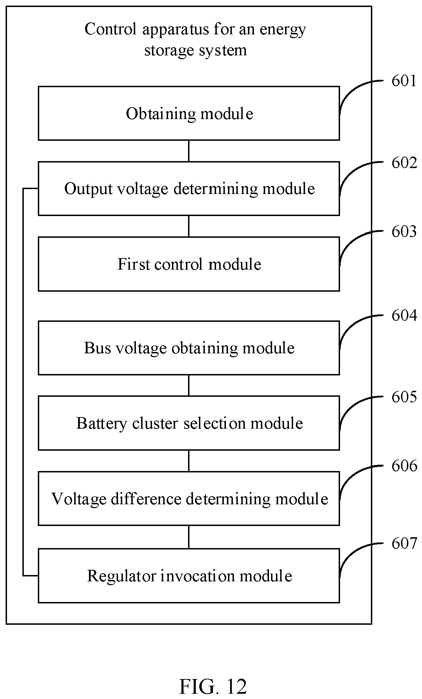

In some embodiments of this application, referring to FIG. 12, the apparatus further includes:

a bus voltage obtaining module 604, configured to power on a first battery cluster in multiple battery clusters of the energy storage system to obtain the bus voltage;

a battery cluster selection module 605, configured to select the target battery cluster from a second battery cluster other than the first battery cluster;

a voltage difference determining module 606, configured to determine a voltage difference between the first cluster voltage of the target battery cluster and the bus voltage; and

a regulator invocation module 607, configured to: when it is determined based on the voltage difference, that the first regulator is to be invoked, perform the step of determining a second cluster voltage based on the first cluster voltage and a preset redundancy voltage and determining an output voltage of a first regulator corresponding to the target battery cluster in the energy storage system based on a bus voltage and the second cluster voltage.

In some embodiments of this application, the regulator invocation module 607 is configured to: when the voltage difference is greater than a first voltage threshold and less than a second voltage threshold, determine that the first regulator is to be invoked, where the first voltage threshold is determined based on a maximum allowable voltage difference between the multiple battery clusters, and the second voltage threshold is determined based on a maximum regulating voltage of the first regulator.

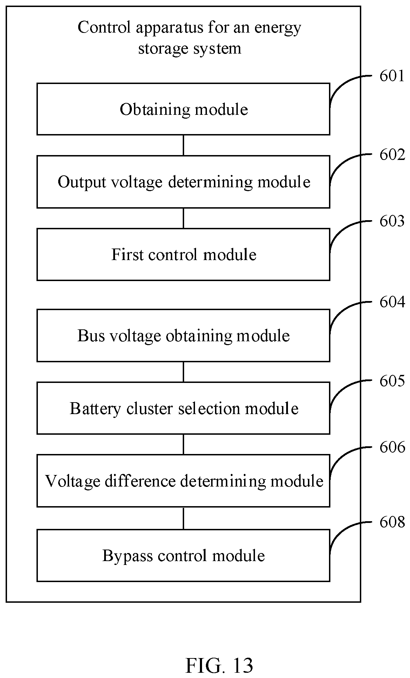

In some embodiments of this application, referring to FIG. 13, the apparatus further includes:
a bypass control module 608, configured to: when it is determined based on the voltage difference that the first regulator is not to be invoked, control the first regulator to change to a bypass state.

In some embodiments of this application, the bus voltage obtaining module 604 is configured to: select, from the multiple battery clusters, a battery cluster with a first cluster voltage being within a target voltage range as the first battery cluster; control a second regulator corresponding to the first battery cluster to change to a bypass state; and power on the first battery cluster to obtain the bus voltage.

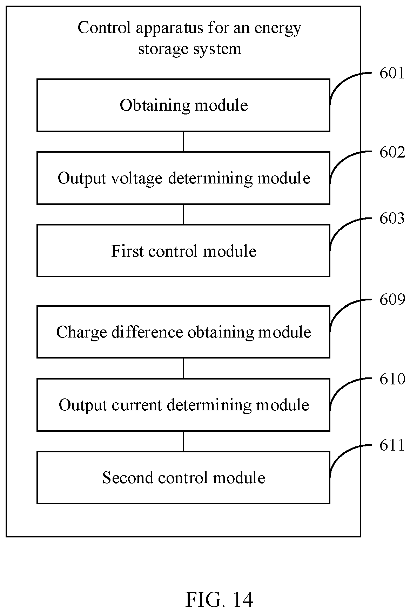

In some embodiments of this application, referring to FIG. 14, the apparatus further includes:

a charge difference obtaining module 609, configured to obtain a maximum charge difference between the multiple battery clusters when the multiple battery clusters are in a charge plateau range or a discharge plateau range, where the charge plateau range is a stage of charging during which a change rate of battery voltage is less than a first change rate threshold, and the discharge plateau range is a stage of discharging during which the change rate of battery voltage is less than a second change rate threshold;

an output current determining module 610, configured to: when it is determined that the maximum charge difference satisfies a preset condition, determine an output current of a third regulator corresponding to a battery cluster to be regulated; and

a second control module 611, configured to control the third regulator to output the output current.

In some embodiments of this application, the output current determining module 609 is configured to determine the output current based on total current of the multiple battery clusters and a maximum allowable current and a current safety margin of a single cluster when the battery cluster to be regulated is in a charging state.

In some embodiments of this application, the output current determining module 609 is configured to determine the output current based on a maximum allowable current and a current safety margin of a single cluster when the battery cluster to be regulated is in a discharging state.

For specific limitations on the control apparatus for an energy storage system, reference may be made to the limitations in the foregoing control method for an energy storage system, and details are not repeated herein. The modules in the control apparatus for an energy storage system may be implemented as a whole or partially by software, hardware and a combination thereof. The foregoing modules may be embedded in or provided independent of a processor of an electronic device in the form of hardware, and may also be stored in a memory of the electronic device in the form of software, so that the processor can invoke the modules to perform the corresponding operations of the modules.

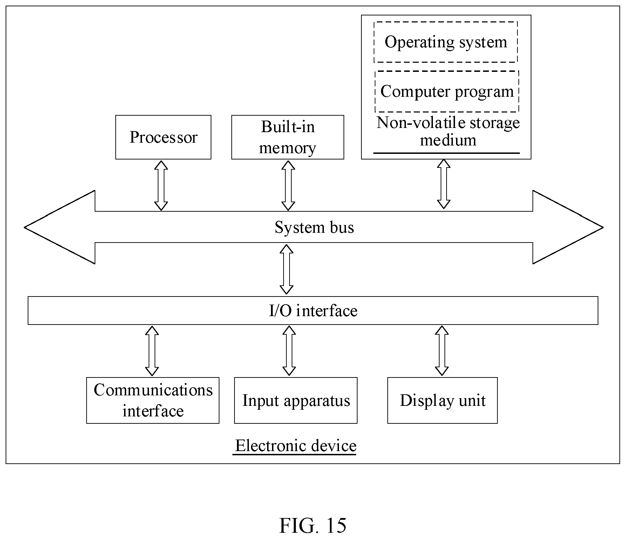

According to some embodiments of this application, an electronic device is provided. FIG. 15 shows the internal structure of the electronic device. The electronic device includes a processor, a memory, a communications interface, a display, and an input apparatus that are connected via a system bus. The processor of the electronic device is used to provide computing and control capabilities. The memory of the electronic device includes a non-volatile storage medium or a built-in memory. The non-volatile storage medium stores an operating system and computer programs. The built-in memory provides an environment for operation of the operating system and the computer programs in the non-volatile storage medium. The communications interface of the electronic device is used for wireless or wired communication with an external terminal, where the wireless communication may be implemented by means of WIFI, a mobile cellular network, NFC (near field communication), or other technologies. The computer programs are executed by the processor to implement a control method for the energy storage system. The display of the electronic device may be a liquid crystal display or an electronic ink display. The input apparatus of the electronic device may be a touch layer covered on the display, a button, a trackball, or touch panel provided on the housing of the electronic device, or an external keyboard, touch panel, a mouse, or the like.

A person skilled in the art can understand that the structure illustrated in FIG. 15 is merely a block diagram of part of the structure associated with the solution in this application, and does not constitute limitations on the electronic device, to which the solution in this application is applied. A specific electronic device may include more or fewer components than as shown in the figure, be combined with some components, or have components arranged in a different manner.

According to some embodiments of this application, a non-transitory computer readable storage medium including instructions is further provided, for example, a memory including instructions. The instructions can be executed by a processor of the electronic device to implement the foregoing method. The computer readable storage medium may be an ROM, a random access memory (RAM), a CD-ROM, a magnetic tape, a floppy disk, an optical data storage device, or the like.

According to some embodiments of this application, a computer program product is further provided. When the computer program is executed by a processor, the foregoing method is implemented. The computer program product includes one or more computer instructions. When the computer instructions are being loaded and executed on a computer, the foregoing method can be fully or partially implemented in full or partial compliance with the processes or functions described in the embodiments of the present disclosure.

A person of ordinary skill in the art may understand that all or some of the processes of the method in the embodiments may be implemented by relevant hardware instructed by a computer program. The computer program may be stored in a non-volatile computer readable storage medium. When the computer program is executed, the processes of the method embodiments may be included. Any reference to the memory, storage, database, or other media used in the embodiments of the present disclosure may include at least one of a non-volatile memory and a volatile memory. The non-volatile memory may include a read-only memory (Read-Only Memory, ROM), a magnetic tape, a floppy disk, a flash memory, an optical memory, or the like. The volatile memory may include a random access memory (Random Access Memory, RAM) or an external cache memory. As a description rather than a limitation, the RAM may be in various forms, such as a static random access memory (Static Random Access Memory, SRAM) or a dynamic random access memory (Dynamic Random Access Memory, DRAM).

The various technical features mentioned in the foregoing embodiments may be combined in any manners. For ease of description, some possible combinations of the various technical features in the foregoing embodiments are not described herein. However, all combinations of these technical features shall be considered to fall within the scope of the specification in absence of conflicts.

The foregoing embodiments express merely several implementations of this application for ease of understanding the technical solution of this application in a specific and detailed manner, which should not be construed as a limitation on the scope of protection of the patent of the invention. It should be noted that several modifications and improvements may be made by those of ordinary skill in the art without departing from the concept of this application, and such modifications and improvements shall fall within the protection scope of this application. It should be understood that the technical solutions obtained by those skilled in the art through logical analysis, reasoning or limited experiments on the basis of the technical solutions provided in this application shall all fall within the protection scope of the appended claims in this application. Therefore, the scope of protection of the patent in this application shall be subject to the content of the appended claims, and the specification and the accompanying drawings may be used to interpret the content of the claims.

**Claims**

1. A control method for an energy storage system, wherein the method comprises:

    obtaining a first cluster voltage of a target battery cluster in the energy storage system;
    determining a second cluster voltage based on the first cluster voltage and a preset redundancy voltage, and determining an output voltage of a first regulator corresponding to the target battery cluster in the energy storage system based on a bus voltage and the second cluster voltage, wherein the redundancy voltage is within a regulation range of the first regulator; and

controlling the first regulator to output the output voltage for voltage regulation on the target battery cluster.

2. The method according to claim 1, **characterized in that** the determining a second cluster voltage based on the first cluster voltage and a preset redundancy voltage comprises:

obtaining a state of charge of the target battery cluster; and

determining the second cluster voltage based on the state of charge, the first cluster voltage, and the redundancy voltage.

3. The method according to claim 2, **characterized in that** the determining the second cluster voltage based on the state of charge, the first cluster voltage, and the redundancy voltage comprises:

determining a target regulation mode based on the state of charge, wherein the target regulation mode comprises an anti-overcharge regulation mode or an anti-overdischarge regulation mode; and

using the target regulation mode to determine the second cluster voltage based on the first cluster voltage and the redundancy voltage.

4. The method according to claim 3, **characterized in that** the using the target regulation mode to determine the second cluster voltage based on the first cluster voltage and the redundancy voltage comprises:
when the target regulation mode is the anti-overcharge regulation mode, obtaining a difference between the first cluster voltage and the redundancy voltage to obtain the second cluster voltage.

5. The method according to claim 3, **characterized in that** the using the target regulation mode to determine the second cluster voltage based on the first cluster voltage and the redundancy voltage comprises:
when the target regulation mode is the anti-overdischarge regulation mode, obtaining a sum of the first cluster voltage and the redundancy voltage to obtain the second cluster voltage.

6. The method according to claim 3, **characterized in that** the determining a target regulation mode based on the state of charge comprises:

when a value of the state of charge of the target battery cluster is greater than a first charge threshold, determining that the target regulation mode is the anti-overcharge regulation mode; or

when a value of the state of charge of the target battery cluster is less than a second charge threshold, determining that the target regulation mode is the anti-overdischarge regulation mode.

7. The method according to claim 1, **characterized in that** the determining an output voltage of a first regulator corresponding to the target battery cluster in the energy storage system based on a bus voltage and the second cluster voltage comprises:
determining a difference between the bus voltage and the second cluster voltage as the output voltage.

8. The method according to claim 1, **characterized in that** the method further comprises:

powering on a first battery cluster in multiple battery clusters of the energy storage system to obtain the bus voltage;

selecting the target battery cluster from a second battery cluster other than the first battery cluster;

determining a voltage difference between the first cluster voltage of the target battery cluster and the bus voltage; and

when it is determined based on the voltage difference that the first regulator is to be invoked, performing the step of determining a second cluster voltage based on the first cluster voltage and a preset redundancy voltage and determining an output voltage of a first regulator corresponding to the target battery cluster in the energy storage system based on a bus voltage and the second cluster voltage.

9. The method according to claim 8, **characterized in that** the determining, based on the voltage difference, that the first regulator is to be invoked comprises:
when the voltage difference is greater than a first voltage threshold and less than a second voltage threshold, determining that the first regulator is to be invoked, wherein the first voltage threshold is determined based on a maximum allowable voltage difference between the multiple battery clusters, and the second voltage threshold is determined based on a maximum regulating voltage of the first regulator.

10. The method according to claim 8, **characterized in that** the method further comprises:
when it is determined based on the voltage difference that the first regulator is not to be invoked, controlling the first regulator to change to a bypass state.

11. The method according to claim 8, **characterized in that** the powering on a first battery cluster in multiple battery clusters of the energy storage system to obtain the bus voltage comprises:

selecting, from the multiple battery clusters, a battery cluster with a first cluster voltage being within a target voltage range as the first battery cluster; and
controlling a second regulator corresponding to the first battery cluster to change to a bypass state, and powering on the first battery cluster to obtain the bus voltage.

12. The method according to any one of claims 1 to 11, **characterized in that** the method further comprises:

obtaining a maximum charge difference between the multiple battery clusters when the multiple battery clusters are in a charge plateau range or a discharge plateau range, wherein the charge plateau range is a stage of charging during which a change rate of battery voltage is less than a first change rate threshold, and the discharge plateau range is a stage of discharging during which the change rate of battery voltage is less than a second change rate threshold;
when it is determined that the maximum charge difference satisfies a preset condition, determining an output current of a third regulator corresponding to a battery cluster to be regulated; and
controlling the third regulator to output the output current.

13. The method according to claim 12, **characterized in that** the determining an output current of a third regulator corresponding to a battery cluster to be regulated comprises:
determining the output current based on total current of the multiple battery clusters and a maximum allowable current and a current safety margin of a single cluster when the battery cluster to be regulated is in a charging state.

14. The method according to claim 12, **characterized in that** the determining an output current of a third regulator connected in series with a battery cluster to be regulated comprises:
determining the output current based on a maximum allowable current and a current safety margin of a single cluster when the battery cluster to be regulated is in a discharging state.

15. An energy storage system, comprising a controller, at least one regulator, and multiple battery clusters connected in parallel; wherein
the controller is configured to: obtain a first cluster voltage of a target battery cluster; determine a second cluster voltage based on the first cluster voltage and a preset redundancy voltage, and determine an output voltage of a regulator corresponding to the target battery cluster based on a bus voltage and the second cluster voltage; and control the regulator to output the output voltage for voltage regulation on the target battery cluster, wherein the redundancy voltage is within a regulation range of the regulator.

16. The energy storage system according to claim 15, **characterized in that** the energy storage system further comprises a bypass switch, and the bypass switch is connected in parallel with the regulator; and
the controller is further configured to: when it is determined that the regulator is not to be invoked, control the bypass switch to be on so that the regulator changes to a bypass state.

17. The energy storage system according to claim 15, **characterized in that** the energy storage system further comprises a first relay, a second relay, and a precharge relay, wherein the first relay is connected in series with a first end of the target battery cluster, the second relay is connected in series with a second end of the target battery cluster, and the precharge relay is connected in parallel with the second relay; and
the controller is further configured to: when powering on the target battery cluster, control the first relay and the precharge relay to be on in sequence; and after a preset duration, control the second relay to be on, and then control the precharge relay to be off.

18. The energy storage system according to any one of claims 15 to 17, **characterized in that** the regulator is a DCDC converter.

19. A control apparatus for an energy storage system, wherein the apparatus comprises:

an obtaining module, configured to obtain a first cluster voltage of a target battery cluster in the energy storage system;

an output voltage determining module, configured to: determine a second cluster voltage based on the first cluster voltage and a preset redundancy voltage, and determine an output voltage of a first regulator corresponding to the target battery cluster in the energy storage system based on a bus voltage and the second cluster voltage, wherein the redundancy voltage is within a regulation range of the first regulator; and

a first control module, configured to control the output voltage of the first regulator for voltage regulation on the target battery cluster.

20. An electronic device, comprising a memory and a processor, wherein the memory stores a computer program, and when the computer program is executed by the processor, the method according to any one of claims 1 to 14 is implemented.

21. A computer readable storage medium, storing a computer program, wherein when the computer program is executed by a processor, the method according to any one of claims 1 to 14 is implemented.

22. A computer program product, comprising a computer program, wherein when the computer program is executed by a processor, the method according to any one of claims 1 to 14 is implemented.

FIG. 1

FIG. 2

Obtain a state of charge of a target battery cluster — 301

Determine a second cluster voltage based on the state of charge, a first cluster voltage, and a redundancy voltage — 302

FIG. 3

Determine a target regulation mode based on a state of charge — 3021

Use the target regulation mode to determine a second cluster voltage based on a first cluster voltage and a redundancy voltage — 3022

FIG. 4

Power on a first battery cluster in multiple battery clusters of an energy storage system to obtain a bus voltage ⟋401

Select a target battery cluster from a second battery cluster other than the first battery cluster ⟋402

Determine a voltage difference between a first cluster voltage of the target battery cluster and the bus voltage ⟋403

When it is determined based on the voltage difference that a first regulator is to be invoked, determine a second cluster voltage based on the first cluster voltage and a preset redundancy voltage, and determine an output voltage of the first regulator corresponding to the target battery cluster in the energy storage system based on the bus voltage and the second cluster voltage ⟋404

FIG. 5

Power on a first battery cluster in multiple battery clusters of an energy storage system to obtain a bus voltage ⌐401

Select a target battery cluster from a second battery cluster other than the first battery cluster ⌐402

Determine a voltage difference between a first cluster voltage of the target battery cluster and the bus voltage ⌐403

When it is determined based on the voltage difference that a first regulator is to be invoked, determine a second cluster voltage based on the first cluster voltage and a preset redundancy voltage, and determine an output voltage of the first regulator corresponding to the target battery cluster in the energy storage system based on the bus voltage and the second cluster voltage ⌐404

When it is determined based on the voltage difference that the first regulator is not to be invoked, control the first regulator to change to a bypass state ⌐405

FIG. 6

Obtain a maximum charge difference between multiple battery clusters when the plurality of battery clusters are in a charge plateau range or a discharge plateau range ⌐501

When it is determined that the maximum charge difference satisfies a preset condition, determine an output current of a third regulator corresponding to a battery cluster to be regulated ⌐502

Control the third regulator to output the output current ⌐503

FIG. 7

FIG. 8

FIG. 9

FIG. 10

FIG. 11

Control apparatus for an energy
storage system

Obtaining module — 601

Output voltage determining module — 602

First control module — 603

Bus voltage obtaining module — 604

Battery cluster selection module — 605

Voltage difference determining module — 606

Regulator invocation module — 607

FIG. 12

Control apparatus for an energy
storage system

Obtaining module — 601

Output voltage determining module — 602

First control module — 603

Bus voltage obtaining module — 604

Battery cluster selection module — 605

Voltage difference determining module — 606

Bypass control module — 608

FIG. 13

Control apparatus for an energy
storage system

— 601
Obtaining module

— 602
Output voltage determining module

— 603
First control module

— 609
Charge difference obtaining module

— 610
Output current determining module

— 611
Second control module

FIG. 14

FIG. 15

## INTERNATIONAL SEARCH REPORT

| | International application No. |
|---|---|
| | **PCT/CN2022/118456** |

**A.  CLASSIFICATION OF SUBJECT MATTER**

H02J 7/00(2006.01)i;  H01M 10/42(2006.01)i;  H01M 10/44(2006.01)i

According to International Patent Classification (IPC) or to both national classification and IPC

**B.  FIELDS SEARCHED**

Minimum documentation searched (classification system followed by classification symbols)

H02J H01M

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 电池, 环流, 均衡, 母线, 电压, 误差, 冗余, 补偿 or 校正, 变换器, 逆变器, DC?DC, 充电, 放电, 荷电, batter+, cell?, circulat+, balanc+, bus, voltage, SOC

**C.  DOCUMENTS CONSIDERED TO BE RELEVANT**

| Category* | Citation of document, with indication, where appropriate, of the relevant passages | Relevant to claim No. |
|---|---|---|
| PX | CN 114583807 A (NINGDE CONTEMPORARY AMPEREX TECHNOLOGY CO., LTD.) 03 June 2022 (2022-06-03) description, paragraphs [0050]-[0169], and figures 1-15 | 1-22 |
| X | CN 212588110 U (BYD CO., LTD.) 23 February 2021 (2021-02-23) description, paragraphs [0051]-[0084], and figures 3-10 | 1, 2, 7-11, 15-22 |
| A | CN 212588110 U (BYD CO., LTD.) 23 February 2021 (2021-02-23) description, paragraphs [0051]-[0084], and figures 3-10 | 3-6, 12-14 |
| Y | CN 112564224 A (SHENZHEN WEILAN NEW ENERGY TECHNOLOGY CO., LTD.) 26 March 2021 (2021-03-26) description, paragraphs [0028]-[0049], and figure 1 | 1, 2, 7-11, 15-22 |
| Y | CN 102478636 A (BYD CO., LTD.) 30 May 2012 (2012-05-30) description, paragraphs [0012]-[0030], and figures 1 and 2 | 1, 2, 7-11, 15-22 |
| A | CN 112564224 A (SHENZHEN WEILAN NEW ENERGY TECHNOLOGY CO., LTD.) 26 March 2021 (2021-03-26) description, paragraphs [0028]-[0049], and figure 1 | 3-6, 12-14 |
| A | CN 102478636 A (BYD CO., LTD.) 30 May 2012 (2012-05-30) description, paragraphs [0012]-[0030], and figures 1 and 2 | 3-6, 12-14 |

✓ Further documents are listed in the continuation of Box C.      ✓ See patent family annex.

| | |
|---|---|
| *    Special categories of cited documents: "A"  document defining the general state of the art which is not considered to be of particular relevance "E"  earlier application or patent but published on or after the international filing date "L"  document which may throw doubts on priority claim(s) or which is cited to establish the publication date of another citation or other special reason (as specified) "O"  document referring to an oral disclosure, use, exhibition or other means "P"  document published prior to the international filing date but later than the priority date claimed | "T"  later document published after the international filing date or priority date and not in conflict with the application but cited to understand the principle or theory underlying the invention "X"  document of particular relevance; the claimed invention cannot be considered novel or cannot be considered to involve an inventive step when the document is taken alone "Y"  document of particular relevance; the claimed invention cannot be considered to involve an inventive step when the document is combined with one or more other such documents, such combination being obvious to a person skilled in the art "&"  document member of the same patent family |

| Date of the actual completion of the international search | Date of mailing of the international search report |
|---|---|
| **19 November 2022** | **18 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 369 556 A1**

**INTERNATIONAL SEARCH REPORT**

International application No.

**PCT/CN2022/118456**

**C.    DOCUMENTS CONSIDERED TO BE RELEVANT**

| Category* | Citation of document, with indication, where appropriate, of the relevant passages | Relevant to claim No. |
|---|---|---|
| A | CN 113659683 A (SICHUAN CLOU ENERGY ELECTRIC CO., LTD.) 16 November 2021 (2021-11-16)<br>      entire document | 1-22 |
| A | KR 101572612 B1 (HANBIT EDS CO., LTD.) 02 December 2015 (2015-12-02)<br>      entire document | 1-22 |

Form PCT/ISA/210 (second sheet) (January 2015)

33

**INTERNATIONAL SEARCH REPORT**
Information on patent family members

International application No.

**PCT/CN2022/118456**

| Patent document cited in search report | | | Publication date (day/month/year) | Patent family member(s) | | | Publication date (day/month/year) |
|---|---|---|---|---|---|---|---|
| CN | 114583807 | A | 03 June 2022 | None | | | |
| CN | 212588110 | U | 23 February 2021 | WO | 2022002121 | A1 | 06 January 2022 |
| CN | 112564224 | A | 26 March 2021 | None | | | |
| CN | 102478636 | A | 30 May 2012 | CN | 102478636 | B | 03 September 2014 |
| CN | 113659683 | A | 16 November 2021 | None | | | |
| KR | 101572612 | B1 | 02 December 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022104962310